Europäisches Patentamt

European Patent Office

Office européen des brevets

(19)

(11) Publication number: **0 113 495**

**B1**

(12) **EUROPEAN PATENT SPECIFICATION**

(45) Date of publication of patent specification: **30.09.87**

(51) Int. Cl.⁴: **B 60 K 17/28**

(21) Application number: **83303318.6**

(22) Date of filing: **08.06.83**

(54) **Vehicle transmission with power takeoff.**

(30) Priority: **05.01.83 EP 83300039**

(43) Date of publication of application:
**18.07.84 Bulletin 84/29**

(45) Publication of the grant of the patent:
**30.09.87 Bulletin 87/40**

(84) Designated Contracting States:
**AT BE DE FR GB IT NL SE**

(56) References cited:
**DE-A-2 410 163**
**DE-B-1 285 338**
**DE-U-1 971 348**
**FR-A-1 155 870**
**FR-A-2 057 477**
**FR-A-2 079 428**
**US-A-2 821 868**
**US-A-3 339 432**

(73) Proprietor: **DEERE & COMPANY**
**1 John Deere Road**
**Moline Illinois 61265 (US)**

(72) Inventor: **Weib, Heinz**
**Volkerstrasse 24**
**D-6140 Bensheim (DE)**

(74) Representative: **Pears, David Ashley**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 113 495

**Description**

The present invention relates to a vehicle transmission comprising a transmission input shaft, a multispeed gearbox having a gearbox input shaft, a preliminary gear coupled between the transmission input shaft and the gearbox input shaft, the preliminary gear providing at least two forward speeds, and a PTO transmission with a PTO input shaft driven from the transmission input shaft. Such a transmission is especially suitable for an agricultural tractor and is known from DE—A—2 410 163, for example.

The gearbox may be a powershift gearbox comprising a dual clutch main gear in cascade with a range gear selecting between low and high speed ranges. A powershift gearbox is a gearbox which can be shifted under load, making use of its own clutches and/or brakes rather than relying on an external clutch.

The preliminary gear may be a speed amplifier or reducer or a so-called splitter gear which provides underdrive and overdrive as well as direct drive.

PTO driven implements can be divided into two basic groups, those for high load operations and those for medium and low load operations. Corresponding PTO speeds of 1000 rpm and 540 rpm have become fairly standard, being selected by a two-speed PTO gearbox. If the PTO speeds are both related to rated engine speed, or say 95% rated speed, that engine speed has to be employed regardless of the implement load in order to get the correct PTO speed. In other words, the rated engine speed is employed even when driving a medium or low load implement. In this case the PTO gearbox will have direct drive and 0.54 ratio underdrive, assuming that the rated engine speed is 1000 rpm.

The above scheme is clearly disadvantageous from the point of view of fuel economy and it is therefore known to relate the low PTO speed to 80% rated engine speed. This means that the PTO gearbox underdrive ratio is increased from 0.54 to 0.675. The high PTO speed remains direct drive in the PTO gearbox. It is known to extend this principle to a three-speed PTO gearbox giving PTO speeds of 1000 rpm, 750 rpm and 540 rpm at progressively reduced engine speeds.

It is also known (DE—B—1 285 338 and DE—U—1 971 348) to provide alternative drive paths for the PTO shaft one of which provides drive related to engine speed, the other of which provides drive related to road speed.

The object of the present invention is to provide even greater flexibility in the relationship between engine speed, road speed and PTO speed, whereby the fuel efficiency of PTO operations may be further improved.

The invention is characterised in that the PTO input shaft is driven directly from a point in between the preliminary gear and the multispeed gearbox.

As will be explained in more detail below, the invention makes it possible to achieve a better and more economical relationship between engine speed, ground speed and PTO input shaft speed. As one example, consider the case of an implement drawn by a tractor and driven by the PTO output shaft and which cannot handle the throughput. The driver naturally throttles back to reduce speed but, in a conventional arrangement in which the PTO is driven directly from the engine, this will have the undesirable effect of reducing PTO speed. The present invention enables the PTO speed to be brought up to the desired value by shifting up in the splitter gear while making a compensating down-shift in the multispeed gearbox. Thus the required PTO speed is achieved economically at a reduced engine speed.

One advantageous embodiment of the invention uses a splitter gear in which some of the underdrive speeds at least approximately duplicate some of the overdrive speeds. This makes it possible to have two different ground speeds for the same PTO speed. Suitable underdrive and overdrive ratios are approximately 0.8 and 1.24. The two different ground speeds for the same PTO speed are then in the ratio 1:1.55.

The preliminary gear is not necessarily a three-speed splitter gear. It may be a two-speed gear preceding the splitter gear or taking the place of the splitter gear. Such a two-speed gear may be a direct/underdrive gear or a direct/overdrive gear. In any event, it makes possible the attainment of a given PTO speed with two different main gearbox ratios for a given ground speed.

An embodiment of the invention will now be described, by way of example, with reference to the accompanying drawings, in which:

Figure 1 is a schematic plan view of a transmission embodying the invention, and

Figure 2 is a cross section of one selector of the gearbox.

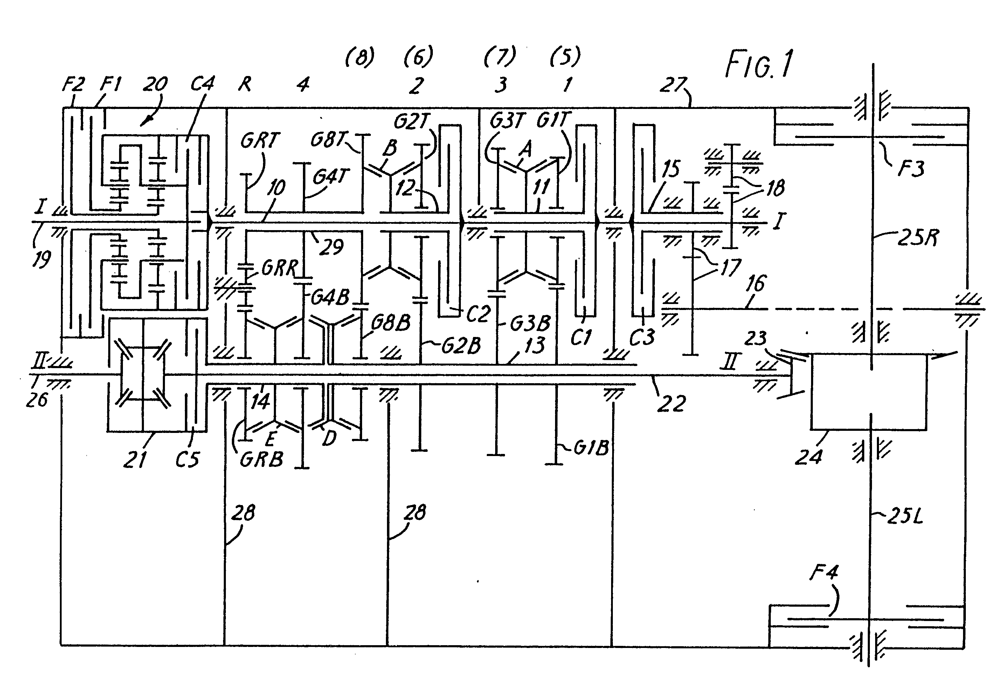

An outline will first be given of the layout of the gearbox shown in Figure 1, before proceeding to a detailed description of the various parts thereof. The elements of the gearbox are laid out mainly on two longitudinal shaft lines I and II which lie in the same horizontal plane. In Figure 1 the front of the vehicle is to the left. The shaft line (II) is centrally disposed while the shaft line (I) is offset laterally, to the righthand side in the illustrated embodiment.

Power flows from a transmission input shaft 19, through a splitter gear 20 to a gearbox input shaft 10 on the first shaft line (I) and thence to two main gearbox clutches C1 and C2 which drive respective hollow top shafts 11 and 12. These top shafts are hollow and the input shaft 10 passes therethrough. In most gears of the gearbox, power flows from the driven top shaft 11 or 12 a corresponding selector A or B and the gearwheel pair thereby selected, to a hollow bottom shaft 13 on the shaft line II. The shaft 13 is coupled to a hollow output shaft 14 on the same shaft line II by way of the range gear which provides a step-down ratio or direct drive in accordance with the position of a selector D.

The gearbox input shaft 10 can also be coupled by a clutch C3 to a hollow shaft 15. This drives a PTO shaft 16 by way of a pair of spur gears 17 and also drives a charge pump within the gearbox casing by way of a pair of spur gears 18. This pump provides hydraulic power for implements attached to the vehicle. A two or more speed PTO beargox (not shown) may be provided externally of the main gearbox. The shaft 19 from the engine is coupled to the main input shaft 10 by way of a splitter gear 20 multiplying the number of gears by two or three depending on the splitter gear stages. As illustrated, the splitter gear is a conventional epicyclic gear providing direct drive when a clutch C4 is engaged, underdrive when a brake F1 is engaged and overdrive when a brake F2 is engaged. The corresponding gear ratios will be explained below but no detailed description of the construction of the splitter gear is required.

The illustrated embodiment makes provision for four wheel drive. The output shaft 14 drives a longitudinal differential 21 from which power flows to the rear wheels by way of a shaft 22 extending rearwardly through the hollow shafts 13 and 14 to a bevel gear 23. This gear drives a transverse differential 24 which divides the power between half shafts 25R and 25L. The differential 24 is provided in well known manner with a lock, preferably hydraulically actuated. The main rearwheel brakes F3 and F4 are also built into the gearbox on the half shafts.

A front wheel drive shaft 26 extends forwardly from the longitudinal differential 21 and drives a front transverse differential dividing power between the front wheel half shafts. These latter elements are not shown and represent the only parts of the transmission outside the gearbox. The longitudinal differential 21 is provided with a lock clutch C5 which enables all power to be routed to the rear wheel or front wheel drive, depending on soil conditions.

The PTO shaft 16 is not driven directly from the engine input shaft 19 but is driven from the main input shaft 10 downstream of the splitter gear 20. This enables more efficient PTO operation as explained above and in more detail below.

Attention will now be given to the details of the main gear and the range gear. As already noted, the main gear has dual clutches C1 and C2 and corresponding selectors A and B. The range gear has the previously mentioned high-low selector D and also has a reverse-low selector E. The various gearwheels are denoted as follows. Gearwheels G1T and G1B are on the top and bottom shaft respectively, as indicated by the final letters T and B, and constitute the gearwheel pair for speed 1 of the main gear, as indicated by the first two symbols G1. Similarly there are gearwheel pairs for second, third and fourth speeds and labelled G2T, G2B and G3T, G3B and G4T, G4B. The corresponding speeds 1, 2, 3 and 4, which are the speeds in the low range of the range gear, are indicated along the top of the diagram. The high range speeds are indicated in brackets as 5, 6, 7 and 8. Another gearwheel pair G8T, G8B is provided for speed 8. Finally gearwheels GRT, GRR and GRB are provided for reverse, denoted at the top by the letter R.

All gearwheels are in constant mesh and the selectors A, B, D and E are synchronised selectors. So far as speeds 1, 2, 3 and 5, 6, 7 are concerned, the main gear is a conventional dual clutch, top synchronised constant mesh gearbox. The gears G1B, G2B and G3B are all fast with the bottom shaft 13. The selector A engages either G1T or G3T (odd gears) to the top shaft 11 while the selector B can engage the even numbered gears G2T, G4T and G8T top shaft 12.

Speeds 4 and 8 are provided in a different manner and the corresponding gearwheel pairs also function as the step-down gears of the range gear. The gears G4T, G8T and GRT are all integral with another hollow shaft 29 on the shaft line I and are driven by the top shaft 12 when the selector B is shifted to the left in Figure 1. The gear wheel pair G8B, G8T together with the pair G4T, G4B function as step-down gears of the range gear, and the low speeds 1, 2, and 3 are selected by shifting the selector D to the right to couple the bottom shaft 13 to the gear G8B. The selector E must also be shifted to the right to couple the gear G4B to the output shaft 14. On the other hand, the high range gears 5, 6 and 7 are selected by shifting the selector D to the left to couple the bottom shaft 13 directly to the output shaft 14.

Speed 4 is selected with the selector E still to the right and with the selector B to the left. The gearwheel pair G4T, G4B drives direct into the output shaft 14. Speed 8 on the other hand, also obtained with the selector B to the left, requires the gear G8B to be connected directly to the output shaft 14. This is achieved by a special construction of the selector D which effectively comprises two individually operable selectors so that both may be engaged simultaneously. This is symbolised by the double line showing of the selector D. When the selector D is engaged both to the right and to the left it can be seen that the gearwheel G8B is coupled through the selector to the output shaft 14.

It can also be seen that in each of speeds 1, 2, 3 and 4 it is possible to engage reverse by shifting the selector E to the left.

Table 1 at the end of this description summarises the way in which the speeds 1 to 8 are obtained under control of the clutches C1 and C2 and the selectors A, B, D and E. The abbreviations ENG and DIS mean engaged and disengaged respectively while the letters L and R indicate shifting of a selector to the left and right respectively in Figure 1. In the columns A, B, D and E a dash indicates that the position of the selector is immaterial.

The control of the various clutches and selectors can basically follow conventional principles whether selection is purely by way of mechanical linkages or, as is preferred, by way of hydraulic actuators. Controlling logic can readily be provided to establish the desired pattern or selection for each change of speed. In particular the control of the selector E may be linked to that of the selector D in the manner which is apparent from the columns D and E of Table 1.

**0 113 495**

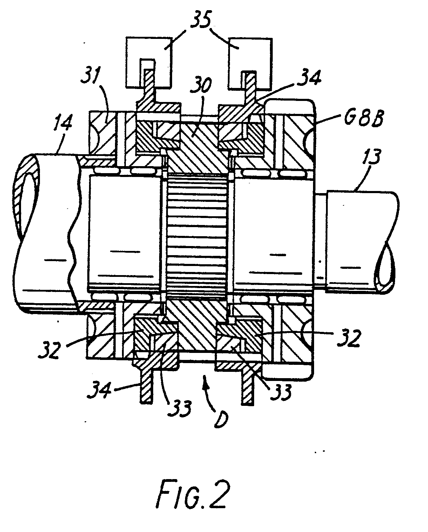

Figure 2 shows a possible construction for the selector D. The hollow shaft 13 has the gearwheel G8B journalled thereon and the synchroniser body 30 is splined to this shaft. On the opposite side of the synchroniser body, instead of another gearwheel, there is provided a collar 31 integral with the hollow output shaft 14. On the two sides of the synchroniser body 30 there are provided separate clutch bodies 32 and separate synchroniser rings 33. Similarly there are two separate collars 34 shifted by respective claws 35 and effecting coupling of the synchroniser body 30 to the gearwheel G8B on the one hand and the collar 31 on the other hand.

The four speed main gear in conjunction with the two speed range gear employing spur gear wheels provides five speeds with a single mesh and three speeds with three meshes.

As to the speeds themselves, Table 2 shows the complete range of ground speeds in kilometres per hour for an engine speed of 2,000 rpm and in the case where a three speed splitter gear 20 is provided with speeds L, M and H. M is direct drive (clutch C4) whereas H is overdrive (brake F2) at a step-up ratio of 1.2386. L is underdrive (brake F1) with a step-down ratio of 0.8074. The eight speeds 1 to 8 are substantially in a geometric progression, the ratios between these speeds being shown between the rows of Table 2. In direct drive M the eight speeds provide a range of speeds from 1.6 to 32 km/h with an average speed ratio of 1.5371. Underdrive L provides intervening speeds and a lowest speed of 1.3 km/h. Apart from providing a top speed of 40 km/h, overdrive H essentially duplicates the top seven underdrive L speeds. There are therefore in total seventeen usefully different ground speeds which is adequate even for very large tractors. The duplication of speeds as between underdrive and overdrive provides flexibility in relating the PTO speed to the ground speed, as explained above. For example, if the PTO input shaft 16 requires a higher speed, without increasing the ground speed, it is possible to shift up to overdrive in the splitter gear 20 with a compensating step-down by way of the main gear and range gear.

If we consider the effect of the change of driving the PTO from the output side of the splitter gear 20, four cases have to be distinguished:

Case 1: No PTO operation; no change.

Case 2: Under the assumption that the throughput of the implement depends directly on the travel speed, coupling the PTO to the splitter gear and shifting up or down will have no effect relative to the proper PTO operation. We have the same condition as speeding the engine up or down.

Case 3: The case in which the implement cannot handle the through-put has already been discussed above. This is the important case in which it is possible to combine a reduced engine speed and a reduced ground speed with maintenance of PTO speed.

Case 4: Stationary PTO application. Since the drive speeds are inoperative the operator has the choice of selecting any one of the following PTO speeds:
540 PTO at 436/540/or 669 rpm
540/1000 shiftable PTO
1000 PTO at 807/1000/or 1239 rpm

These multiple PTO speeds allow improved fuel economy.

TABLE 1

| Speed | C1 | C2 | A | B | D | E |
|---|---|---|---|---|---|---|
| 1 | ENG | DIS | R | — | R | R |
| 2 | DIS | ENG | — | R | R | R |
| 3 | ENG | DIS | L | — | R | R |
| 4 | DIS | ENG | — | L | — | R |
| 5 | ENG | DIS | R | — | L | — |
| 6 | DIS | ENG | — | R | L | — |
| 7 | ENG | DIS | L | — | L | — |
| 8 | DIS | ENG | — | L | L & R | DIS |

4

TABLE 2

| Speeds | L | M | H |
|---|---|---|---|
| | ←————0,8074————1,2386————→ | | |
| 1 | 1,31 | 1,62 | 2,0 |
| ———1,56 | | | |
| 2 | 2,04 | 2,53 | 3,13 |
| ———1,57 | | | |
| 3 | 3,20 | 3,97 | 4,91 |
| ———1,5 | | | |
| 4 | 4,81 | 5,95 | 7,37 |
| ———1,5 | | | |
| 5 | 7,21 | 8,93 | 11,05 |
| ———1,56 | | | |
| 6 | 11,3 | 14,00 | 17,34 |
| ———1,57 | | | |
| 7 | 17,46 | 21,98 | 27,22 |
| ———1,5 | | | |
| 8 | 25,8 | 31,97 | 39,60 |

## Claims

1. A vehicle transmission comprising a transmission input shaft (19), a multispeed gearbox having a gearbox input shaft (10), a preliminary gear (20) coupled between the transmission input shaft (19) and the gearbox input shaft (10), the preliminary gear providing at least two forward speeds, and a PTO transmission (C3, 15—17) with a PTO input shaft (10) driven from the transmission input shaft (19), characterised in that the PTO input shaft (10) is driven directly from a point in between the preliminary gear (20) and the multispeed gearbox.

2. A vehicle transmission according to claim 1, characterised in that the PTO input shaft is the gearbox input shaft (10).

3. A vehicle transmission according to claim 1 or 2, characterised in that the preliminary gear (20) is a splitter gear providing direct, underdrive and overdrive ratios.

4. A vehicle transmission according to claim 3, characterised in that some of the underdrive speeds at least approximately duplicate some of the overdrive speeds.

5. A vehicle transmission according to claim 3 or 4, characterised in that the underdrive and overdrive ratios are approximately 0.8 and 1.24 respectively.

## Patentansprüche

1. Fahrzeuggetriebe, das eine Getriebeeingangswelle (19), ein mehrgängiges Rädergetriebe mit einer Rädergetriebe-Eingangswelle (10) und ein Vorschaltgetriebe (20) aufweist, das zwischen der Getriebeeingangswelle (19) und der Rädergetriebe-Eingangswelle (10) eingeschaltet ist, wobei das Vorschaltgetriebe wenigstens zwei Vorwärtsgeschwindigkeiten aufweist, sowie ein Zapfwellengetriebe (C₃, 15—17) mit einer Zapfwellengetriebe-Eingangswelle (10), die von der Getriebeeingangswelle (19) aus angetrieben ist, dadurch gekennzeichnet, daß die Zapfwellengetriebe-Eingangswelle (10) von einem Punkt zwischem dem Vorschaltgetriebe (20) und dem mehrgängigen Rädergetriebe aus direkt angetrieben ist.

2. Fahrzeug nach Anspruch 1, dadurch gekennzeichnet, daß die Zapfwellengetriebe-Eingangswelle die Rädergetriebe-Eingangswelle (10) ist.

3. Fahrzeuggetriebe nach Anspruch 1 oder 2, dadurch gekennzeichnet, daß das Vorschaltgetriebe (20) ein Aufteilgetriebe ist, welches direkte, Underdrive- und Overdrive-Übersetzungsverhältnisse liefert.

4. Fahrzeuggetriebe nach Anspruch 3, dadurch gekennzeichnet, daß einige der Underdrive-Übersetzungsverhältnisse wenigstens annähernd einige der Overdrive-Übersetzungsverhältnisse verdoppeln.

5. Fahrzeuggetriebe nach Anspruch 3 oder 4, dadurch gekennzeichnet, daß die Unterdrive- und Overdrive-Übersetzungsverhältnisse annähernd jeweils 0,8 bzw. 1,24 betragen.

## Revendications

1. Transmission de véhicule comprenant un arbre d'entrée de transmission (19), une boîte de vitesses à plusieurs vitesses comportant un arbre d'entrée de boîte de vitesses (10), un train amont (20) accouplé entre l'arbre d'entrée de transmission (19) et l'arbre d'entrée de boîte de vitesses (10), le train amont fournissant au moins deux vitesses de marche avant, et une transmission de prise de force (C3, 15—17) comportant un arbre d'entrée de prise de force (10) entraîné à partir de l'arbre d'entrée de transmission

**0 113 495**

(19), caractérisée en ce que l'arbre d'entrée de prise de force (10) est entraîné directement à partir d'un point intermédiaire entre le train amont (20) et la boîte de vitesses à plusieurs vitesses.

2. Transmission de véhicule suivant la revendication 1, caractérisée en ce que l'arbre d'entrée de prise de force est l'arbre d'entrée de boîte de vitesses (10).

3. Transmission de véhicule suivant la revendication 1 ou 2, caractérisée en ce que le train amont (20) est un train répartiteur fournissant des rapports en prise directe, en démultiplication et en surmultiplication.

4. Transmission de véhicule suivant la revendication 3, caractérisée en ce que certaines des vitesses démultipliées reproduisent au moins approximativement certaines des vitesses surmultipliées.

5. Transmission de véhicule suivant la revendication 3 ou 4, caractérisée en ce que les rapports de démultiplication et de surmultiplication sont approximativement de 0,8 et 1,24 respectivement.

6

FIG.1

FIG.2

2